# EUROPÄISCHE PATENTSCHRIFT

(11) **EP 2 558 396 B1**
(45) Veröffentlichungstag und Bekanntmachung des Hinweises auf die Patenterteilung: **11.05.2016**
(21) Anmeldenummer: 11709679.2
(22) Anmeldetag: 11.03.2011
(51) Int. Cl.: B66B 5/18, B66B 5/20, F16D 65/14, F16D 63/00

(54) **AKTUATOR ZU EINER BREMSEINRICHTUNG UND EINE AUFZUGSANLAGE**
ACTUATOR FOR A BRAKING DEVICE AND AN ELEVATOR INSTALLATION
ACTIONNEUR POUR UN DISPOSITIF DE FREINAGE ET UNE INSTALLATION D'ASCENSEUR

(30) Priorität: 18.03.2010 EP 10156865
(43) Veröffentlichungstag der Anmeldung: 20.02.2013
(73) Patentinhaber: Inventio AG, 6052 Hergiswil NW (CH)
(72) Erfinder: HUSMANN, Josef, CH-6006 Luzern (CH)
(74) Vertreter: Blöchle, Hans
(86) Internationale Anmeldenummer: PCT/EP2011/053670
(87) Internationale Veröffentlichungsnummer: WO 2011/113754

(56) Entgegenhaltungen:
- EP-A1- 1 067 084
- EP-A1- 1 733 992
- EP-A1- 2 154 096
- GB-A- 2 395 752
- US-A- 5 353 895

## Beschreibung

Die Erfindung betrifft einen Aktuator und ein Verfahren zur Betätigung einer Bremseeinrichtung zum Bremsen einer Aufzugskabine und eine Aufzugsanlage mit einem derartigen Aktuator gemäss den unabhängigen Patentansprüchen.

Die Aufzugsanlage ist in einem Gebäude eingebaut. Sie besteht im Wesentlichen aus einer Kabine, welche über Tragmittel mit einem Gegengewicht oder mit einer zweiten Kabine verbunden ist. Mittels eines Antriebes, der wahlweise auf die Tragmittel, direkt auf die Kabine oder das Gegengewicht einwirkt, wird die Kabine entlang von, im Wesentlichen vertikalen, Führungsschienen verfahren. Die Aufzugsanlage wird verwendet um Personen und Güter innerhalb des Gebäudes über einzelne oder mehrere Etagen hinweg zu befördern.

Die Aufzugsanlage beinhaltet Vorrichtungen um die Aufzugskabine im Falle des Versagens des Antriebes oder der Tragmittel zu sichern oder auch bei einem Halt in einer Etage vor ungewolltem Wegdriften zu bewahren. Dazu werden in der Regel Bremseinrichtungen verwendet, welche im Bedarfsfalle die Aufzugskabine auf den Führungsschienen abbremsen können.

US 5,353,895 offenbart eine Bremseinrichtung zum Bremsen einer Aufzugskabine.

Aus EP1733992 ist eine derartige Bremseinrichtung bekannt. Diese Bremseinrichtung kann elektromagnetisch betätigt werden, wobei nach erfolgter Betätigung und sich bewegender Aufzugskabine ein Auslösearm mit Rillen einen Drehbacken mit Bremsplatten mitnimmt und diese Bremsplatten die Kabine bremsen. Hierbei wird durch den Drehbacken der Auslösearm wieder in eine Rückstellposition zurückgesetzt. Nachteilig ist, dass der Auslösearm bei stillstehender Aufzugskabine, bspw. bei einem Halt in einer Etage, wohl betätigt werden kann, dass jedoch eine Rückstellung nur nach einer Drehung des Drehbackens erfolgen kann.

EP2154096 offenbart eine weitere derartige Bremseinrichtung. Auch diese Bremseinrichtung kann elektromagnetisch betätigt werden, wobei im Bedarfsfalle ein Bremsgehäuse mit Bremsbacke an eine Schiene angedrückt wird. Eine nachfolgende Bewegung der Bremseinrichtung dreht die Bremsbacke in ihre Arbeitsstellung. Damit eine genügende Bremskraft erreicht werden kann ist die Bremsbacke entsprechend gross auszuführen, wodurch eine grosse Einbauhöhe dieser Bremseinrichtung entsteht.

Die Erfindung bezweckt somit die Bereitstellung eines Aktuators einer Bremseinrichtung mit Bremse und erforderlichen Betätigungsmitteln, welche zum Anbau an eine Aufzugskabine geeignet ist und welche ein Bremsen der Aufzugskabine bewirken kann. Hierbei soll die Bremseinrichtung auch bei stillstehender Aufzugskabine betätigt werden können um ein allfälliges Wegdriften der Kabine zu verhindern, und sie soll einfach wieder zurückgestellt werden können.

Die in den unabhängigen Patentansprüchen definierten Lösungen erfüllen zumindest Teile dieser Anforderungen.

Hierbei wird eine Bremse beschrieben, die für den Anbau an eine Aufzugskabine vorgesehen ist. Die Aufzugskabine ist entlang von Führungsschienen geführt und die Bremse ist geeignet, um die Aufzugskabine an den Führungsschienen abzubremsen oder ein Wegdriften oder Wegrutschen bei einem Halt in einer Etage zu verhindern. Dazu wird im Bedarfsfalle eine Bremsbacke an die Führungsschiene angedrückt, womit eine entsprechende Bremskraft erzeugt werden kann.

Die Bremse beinhaltet ein Bremsgehäuse, einen Bremsbackenschlitten, die Bremsbacke und vorteilhafterweise eine Rückzugeinrichtung.

Das Bremsgehäuse beinhaltet Befestigungspunkte um die Bremse an der Aufzugskabine zu befestigen, und es beinhaltet die konstruktiven Befestigungs- und Zusammenbaupunkte zur Aufnahme von Bauteilen der Bremse. Das Bremsgehäuse ist ausgelegt um erforderliche Kräfte zu übertragen.

Der Bremsbackenschlitten beinhaltet die Bremsbacke und ist linear verschiebbar im Bremsgehäuse angeordnet. Der Bremsbackenschlitten kann somit im Wesentlichen senkrecht zur Führungsschienenfläche zu- und weggestellt werden.

Die Bremsbacke weist eine kurvenförmige Form auf, d.h. sie beinhaltet gekrümmte und allenfalls gerade Bremsflächen, welche abhängig von einem momentanen Bewegungszustand in Bremswirkung mit der Führungsschiene stehen können. Sie ist drehbar im Bremsbackenschlitten angeordnet. Im Bremsbackenschlitten ist dazu vorteilhafterweise eine Lagerachse angeordnet, welche die Bremsbacke aufnimmt. Die Lagerachse ist vorteilhafterweise mit einer Gleitbeschichtung oder mit einem Rollenlager, beispielsweise einem Nadellager, versehen, und die Bremsbacke verfügt über eine passende Lagerbohrung.

Der Bremsbackenschlitten ist derart im Bremsgehäuse angeordnet, dass er linear zwischen einer Bereitschaftsstellung und einer Einrückstellung verschoben werden kann. In der Bereitschaftsstellung - die Bereitschaftsstellung entspricht auch dem unbetätigten Zustand der Bremse oder der unbetätigten Bremse - ist zwischen Führungsschiene und Bremsbacke ein Lüftspalt vorhanden. Dieser Lüftspalt beträgt in der Regel etwa 1 bis max. etwa 6 mm. Der Lüftspalt ermöglicht, dass die Bremse beim normalen Betrieb die Schiene nicht berührt, wodurch Verschleiss und allfälliges Streifgeräusch verhindert wird. Im Normalbetrieb hält die Rückzugeinrichtung die Bremsbacke und/oder den Bremsbackenschlitten in dieser Bereitschaftsstellung.

Die Rückzugeinrichtung zieht dazu den Bremsbackenschlitten mit der Bremsbacke von der Führungsschiene weg. Zum Betätigen wird der Bremsbackenschlitten mit der Bremsbacke, gegen die Wirkung der Rückzugeinrichtung, senkrecht an die Führungsschiene angedrückt. Damit kann die Bremse einfach in eine Einrückstellung verschoben und auch wieder in die Bereitschaftsstellung zurückgeschoben werden. Durch die senkrechte, lineare Zustellung benötigt die Bremse wenig Platz in der Höhe und sie kann ausgelegt werden um fahrtrichtungsunabhängig zu bremsen.

Anstelle der Rückzugeinrichtung kann auch lediglich eine Rasterposition, beispielsweise ein Kugelschnäpper, verwendet sein, welcher den Bremsbackenschlitten und/oder die Bremsbacke in der Bereitschaftsstellung hält.

Ein Zurückschieben von der Einrückstellung in die Bereitschaftsstellung müsste hierbei durch ein weiteres Steuerelement erfolgen.

Selbstverständlich kann die Bremsbacke, anstelle der Lagerbohrung, auch mit Lagerzapfen ausgeführt sein, welche in Zusammenwirkung mit entsprechend geformten Lagersitzen im Bremsbackenschlitten stehen.

Vorteilhafterweise beinhaltet die Bremse eine Zustelleinrichtung, welche den Bremsbackenschlitten von der Bereitschaftsstellung in die Einrückstellung linear verschieben kann.

Vorteilhafterweise ist die drehbar im Bremsbackenschlitten angeordnete Bremsbacke derart ausgeführt, dass sie in einem ersten Teilbereich um die Lagerachse drehbar ist und in einem zweiten, an den ersten anschliessenden, Teilbereich rechtwinklig, bzw. quer zur Lagerachse längsverschiebbar angeordnet ist. Die Bremsbacke kann somit nach erfolgter Drehung über den ersten Teilbereich über den zweiten Teilbereich im Bremsbackenschlitten längsverschoben werden. Dazu ist die Bremsbacke im ersten Teilbereich im Wesentlichen kreis- oder spiralförmig ausgeführt und im zweiten Teilbereich weist sie eine im Wesentlichen geradlinige Form auf. Die Bremsbacke weist weiter vorteilhafterweise eine langlochähnliche Innenkontur - das heisst, die Lagerbohrung ist ein Langloch - auf, welche ein Drehen und anschliessendes Längsverschieben ermöglicht. Die Rückzugeinrichtung greift an der Bremsbacke an, wodurch die Bremsbacke in der Bereitschaftsstellung durch die Rückzugeinrichtung zurückgezogen wird und durch die Kraftwirkung auf die Lagerachse auch der gesamte Bremsbackenschlitten zurückgezogen wird.

Weiter ist vorteilhafterweise die kreisförmige Kurvenform des ersten Teilbereichs derart ausgeführt, dass sich ein Abstand der Kurve zur Lagerachse in Abhängigkeit eines Drehwinkels, wie bei einem Spiralenabschnitt, proportional zum Drehwinkel vergrössert, und die geradlinige Form des zweiten Teilbereichs ist derart ausgeführt, dass sich ein Abstand der geradlinigen Form zur Längsachse in Abhängigkeit einer Längsverschiebung, wie bei einem Keil, weiter vergrössert.

Damit ergibt sich die vorteilhafte Wirkung, dass die Bremsbacke bei Erreichen der Einrückstellung, entsprechend der Fahrtrichtung der Aufzugskabine und entsprechend der spiralförmigen Kurvenform des ersten Teilbereichs, gedreht wird, wodurch sich der Abstand der Kurve zur Lagerachse vergrössert und der Bremsbackenschiitten dementsprechend zurückgeschoben wird. Dadurch wird in dieser ersten Arbeitsphase im Wesentlichen das Zustellspiel, welches bei der Zustellung von der Bereitschaftsstellung zur Einrückstellung verloren ging, wieder ausgeglichen. Während dieser Bewegung ist deshalb lediglich eine kleine für die Zustellung des Bremsbackenschlittens erforderliche Betätigungskraft vorhanden. Bei Wegfall dieser Betätigungskraft, also bei einer allfälligen Rückstellung der Bremse, kann die Rückzugeinrichtung den Bremsbackenschlitten direkt wieder in die Bereitschaftsstellung zurückführen.

Bewegt sich die Aufzugskabine, bzw. die Bremse weiter, bzw. befindet sie sich in Fahrt, wird jedoch die Bremsbacke selbsttätig weiterbewegt. Sie geht nun von der Drehbewegung, mit Erreichen des zweiten Teilbereichs, in eine geradlinige Zustellbewegung über. Die Bremsbacke wird rechtwinklig zur Lagerachse längsverschoben, wodurch sich der Abstand der Kurve zur Lagerachse weiter vergrössert. Diese Abstandsvergrösserung, bzw. die zweite Arbeitsphase, bewirkt ein weiteres Zurückschieben des Bremsbackenschlittens. Dieses wird benutzt um eine Andrückkraft aufzubauen, welche ein sicheres Abbremsen der Kabine erlaubt.

Eine derart gestaltete Bremse kann hervorragend verwendet werden, um beispielsweise eine Aufzugskabine beim Halt auf einer Etage gegen Wegdriften zu sichern und die Bremse trotzdem bei nur geringen Driftbewegungen, welche beispielsweise von Seildehnungen stammen, einfach wieder zurücksetzen zu können. Die Bremswirkung ist zudem in beide Fahrtrichtungen vorhanden und es wird im Gesamten nur wenig Bauhöhe benötigt.

Weiter kann, durch die Bestimmung der Form des ersten und zweiten Teilbereichs, die resultierende Andrück- und damit die Bremskraft in die beiden Fahrtrichtungen unterschiedlich bestimmt werden. Um die Kabine gegen ein Fallen zu sichern sind in der Regel grössere Bremskräfte erforderlich als bei einem Abbremsen der Kabine bei einer Aufwärtsfahrt.

Vorteilhafterweise beinhaltet die Bremse weiter einen Druckfederblock mit Druckfedern. Diese Druckfedern sind im Druckfederblock auf eine voreinstellbare Vorspannkraft vorgespannt. Der Bremsbackenschlitten ist in der Bereitschaftsstellung durch die Rückzugeinrichtung anliegend zum Druckfederblock positioniert, bzw. wird durch die Rückzugeinrichtung an einen durch den Druckfederblock bestimmten Anschlag gezogen.

Damit kann die Bremskraft gezielt eingestellt werden, da durch die Form der Bremsbacke die Weggeometrien und somit resultierende Federwege bestimmt sind. Somit kann anhand von Federcharakteristiken und unter Berücksichtigung erwarteter Reibwerte zwischen Bremsbacke und Führungsschiene eine erforderliche Vorspannung bestimmt werden.

Vorteilhafterweise beinhaltet die Rückzugeinrichtung eine an der Bremsbacke angreifende Federeinrichtung, beispielsweise eine Spiralfeder, welche vorteilhafterweise über einen Seilzug an der Bremsbacke angreift und damit den Bremsbackenschlitten in die Bereitschaftsstellung zieht.

Damit kann gleichzeitig die Bremsbacke jeweils wieder in ihre Mittellage zurückgebracht werden und der Bremsbackenschlitten zum Druckfederblock zurückgezogen werden.

Vorteilhafterweise ist die Bremsbacke unsymmetrisch ausgeführt, so dass sich beidseitig der kreisförmigen Kurvenform des ersten Teilbereichs jeweils ein zweiter geradliniger Teilbereich derart anschliesst, dass sich ein Abstand zwischen der Kurve und der anschliessenden geradlinigen Form und der Lagerachse, in Abhängigkeit des Drehwinkels und der Längsverschiebung, vergrössert. Die Vergrösserung des Abstandes ist, abhängig von der Dreh- und Verschieberichtung der Bremsbacke, unterschiedlich. Dadurch können fahrtrichtungsabhängige Bremskräfte erzeugt werden, da die unterschiedliche Vergrösserung des Abstandes unterschiedliche Andrückkräfte bewirken. Dies ist hilfreich, da in einer Aufzugsanlage in der Regel, wie vorgängig schon beschrieben, in Abwärtsrichtung grössere Bremskräfte gefordert werden um einen allfällig abstürzenden Fahrkorb, bzw. Kabine, auffangen zu können.

Die Bremsbacke selbst ist aus einem Material hergestellt, welches als Bremsmaterial geeignet ist. Dies können im einfachsten Fall gehärtete Stahlflächen sein oder es können auch hochwertige, beispielsweise keramische, Bremsflächen sein, welche dann vorteilhafterweise auf einen Grundkörper aufgetragen oder an diesem befestigt werden. Auch eine Verwendung von Bremsflächen mit Hartmetalleinsätzen hat sich bewährt. Ein Steigwinkel, welcher die Änderung des Abstandes der Kurve zum Drehpunkt, bzw. zur Längsachse, in Abhängigkeit des Drehwinkels und der Längsverschiebung beschreibt, ist in Abstimmung mit dem verwendeten Bremsmaterial bestimmt, so dass ein selbsttätiges, bzw. automatisches Einrücken, der Bremse gewährleistet wird, sobald der Bremsbackenschlitten seine Einrückstellung erreicht hat und eine Fahrbewegung der Aufzugskabine stattfindet.

Da die in Abwärtsrichtung geforderten Bremskräfte in der Regel deutlich grösser als die in Aufwärtsrichtung erforderlichen Bremskräfte sind, werden durch die Formgebung der Bremsbacke die Andrückkräfte, wie bereits erläutert, entsprechend gesteuert. Um eine gute Bremsung zu erzielen sind jedoch auch minimale Flächenpressungen, zwischen Bremsbacke und Führungsschiene erforderlich, welche einen Aufbau eines genügenden Reibwerts sicherstellen. Um in Abwärts- und Aufwärtsrichtung vergleichbare Flächenpressungen zu erzielen, kann es von Vorteil sein, wenn der betreffende zweite Teilbereich der Bremsbacke mit einer kleineren Bremsfläche, beispielsweise durch Anbringen von Längsnuten oder Längskufen, ausgeführt ist.

Besonders vorteilhaft ist, wenn eine derartige Bremse jeweils zwei Bremsbackenschlitten mit Bremsbelägen und Rückzugeinrichtung aufweist und diese Teile im Wesentlichen in symmetrischer Anordnung im Bremsgehäuse, einander gegenüberliegend eingebaut sind, so dass beim Zusammenwirken mit der Führungsschiene die Führungsschiene zwischen den zwei Bremsbackenschlitten mit zugehörigen Bremsbelägen verläuft. Die Zustelleinrichtung ist dabei so ausgeführt, dass bei einer Zustellung die beiden Bremsbackenschlitten gegeneinander verschoben werden, wodurch die zugehörigen Bremsbeläge die Führungsschiene klemmen.

Alternativ beinhaltet die Bremse zusätzlich zu dem Bremsbackenschlitten mit Bremsbacke und Rückzugeinrichtung eine diesem Bremsbackenschlitten gegenüberliegende feste Bremsplatte, so dass beim Zusammenwirken mit der Führungsschiene die Führungsschiene zwischen dem Bremsbackenschlitten mit zugehöriger Bremsbacke und der festen Bremsplatte verläuft.

Zwei einander gegenüberliegende Bremsbackenschlitten sind vorteilhaft, wenn beidseitig der Führungsschiene ein grosser Lüftspalt erreicht werden soll. Diese Ausführung benötigt jedoch einen entsprechenden Bauraum beidseitig der Schiene. Eine einseitig feste Bremsplatte ist demzufolge vorteilhaft, wenn kleine Luftspalte genügen. Damit kann Bauraum gespart werden, da auf einer Seite der Schiene nur wenig Platz erforderlich ist. Gleichzeitig ist diese Ausführung auch günstiger herzustellen.

Bei einer derartigen Bremse kann eine Bremsung insgesamt einfach erreicht werden, indem der Bremsbackenschlitten mittels der Zustelleinrichtung von ihrer Bereitschaftsstellung in die Eingriffsstellung zugestellt wird, wobei die im Bremsbackenschlitten angeordnete Bremsbacke mittels der Zustelleinrichtung an die Führungsschiene angedrückt wird.

Sofern sich die Kabine in einem Stillstand - z.B. in einer Etage - befindet, bleibt die Bremse in dieser Einrückstellung. Wenn sich die Kabine ordnungsgemäss gesteuert vom Stillstand wegbewegen will, wird die Bremse durch eine Steuerung zurückgestellt, indem die Zustelleinrichtung in Zusammenwirkung mit der Rückzugeinrichtung den Bremsbackenschlitten wieder zurück in die Bereitschaftsstellung bringt. Dies ist mit kleiner Kraft möglich, da noch keine wesentliche Andrückkraft vorhanden ist.

Bewegt sich die Kabine jedoch ungewollt aus dem Stillstand weg, oder befindet sie sich in Fahrt, wird die Bremsbacke entlang des ersten Teilbereichs der Bremsbacke selbsttätig gedreht. Dabei wird der Bremsbackenschlitten entsprechend der Form der Bremsbacke, insbesondere durch die, durch den ersten Teilbereich bestimmte, erste Abstandsvergrösserung, zurückgedrückt. In dieser Bewegungsphase wird ein Zustellspiel, welches durch das Zustellen der Bremsbacke entstanden ist wieder egalisiert. Bis zu diesem Zeitpunkt kann die Zustelleinrichtung, bzw. die Rückzugeinrichtung den Bremsbackenschlitten jederzeit wieder in die Bereitschaftsposition zurückziehen. Damit können kleine Schwankungen, wie sie beim Beladen der Kabine erfolgen können, aufgefangen, bzw. ausgeglichen, werden.

Bewegt sich die Kabine jedoch noch weiter, erfolgt nun ein selbsttätiges Längsverschieben der Bremsbacke entlang des zweiten Teilbereichs der Bremsbacke. Damit wird der Bremsbackenschlitten entsprechend der durch den zweiten Teilbereich der Bremsbacke bestimmten zweiten Abstandsvergrösserung weiter zurückgedrückt. Hiermit wird nun über den Druckkörper eine erforderliche Andrückkraft aufgebaut, was ein Abbremsen der Kabine bewirkt.

Gemäss einem ersten Aspekt der Erfindung ist ein Aktuator beschrieben, wie er zur Zustellung der vorgängig beschriebenen Bremse vorteilhafterweise verwendet werden kann.

Der Aktuator ist ausgelegt, um eine Bremse, bzw. vorzugsweise zwei Bremsen einer Aufzugskabine in einer Bereitschaftsstellung zu halten und sie bedarfsgemäss in eine Einrückstellung zu bringen. Der Aktuator beinhaltet hierbei einen Kraftspeicher, eine Halteeinrichtung, eine Rückstelleinrichtung und eine, bzw. vorzugsweise zwei Verbindungsstellen, welche den Aktuator zur Bremse, bzw. zur Zustelleinrichtung der Bremse, verbindet.

Vorteilhafterweise ist der Kraftspeicher ein Federspeicher, welcher geeignet ist, im Bedarfsfalle auf die Verbindungsstelle einzuwirken und die Bremse von ihrer Bereitschaftsstellung in die Einrückstellung zu bringen. Die Halteeinrichtung hält hierbei den Kraftspeicher und damit die Verbindungsstelle, vorteilhafterweise mittels eines Elektromagneten, in einer der Bereitschaftsstellung der Bremse entsprechenden ersten Betriebsposition und die Rückstelleinrichtung kann den Kraftspeicher, die Halteeinrichtung und die Verbindungsstelle nach deren Betätigung wieder zurück in die Betriebsposition bringen.

Selbstverständlich kann der Kraftspeicher auch ein pneumatisch oder hydraulisch vorgespannter Speicher sein, welcher seine Energie im Bedarfsfalle abgeben kann.

Erfindungsgemäß wirken der Kraftspeicher, die Halteeinrichtung und die Verbindungsstelle über einen Betätigungshebel zusammen. Dieser Betätigungshebel beinhaltet eine erste Verbindungsstelle zur Verbindung zu der ersten Bremse und eine zweite Verbindungsstelle zur Verbindung des Aktuators zu einer zweiten Bremse. Die erste und die zweite Verbindungsstelle sind derart am Betätigungshebel angeordnet, dass sie unter Einwirkung des Kraftspeichers im Wesentlichen zusammengezogen werden. Im Wesentlichen bedeutet, dass die beiden Verbindungsstellen nicht zwingend direkt linear gegeneinander gezogen werden müssen, sondern dass beispielsweise bei Verwendung des Betätigungshebels die beiden Verbindungsstellen derart verschoben werden dass sich ein Zusammenzieheffekt ergibt, welcher die Zustellung der Bremsen bewirkt. Dieses Zusammenziehen der beiden Verbindungsstellen ist im Besonderen so zu verstehen, dass Verbindungen die den Aktuator zu den Bremsen verbinden unter Einwirkung des Kraftspeichers gegeneinander gezogen oder gegeneinander verschoben werden, wodurch sie auf die beiden Bremsen, bzw. auf Zustelleinrichtungen der Bremsen eine Zugkraft bewirken.

In einer vorteilhaften Ausgestaltung weist der Aktuator weiter eine Dämpfeinrichtung auf, welche einen Bewegungsablauf beim Betätigen des Aktuators dämpft. Damit kann ein Endaufprall des Aktuators und die aus diesem Endaufprall entstehenden Schlaggeräusche und Materialbelastungen verringert werden.

Vorteilhafterweise beinhaltet die Rückstelleinrichtung einen Spindelmotor. Der Spindelmotor ist vorteilhafterweise ein Getriebemotor. Anstelle dieses Spindelantriebes, kann auch eine hydraulische oder pneumatische Rückstelleinrichtung verwendet sein.

Vorteilhafterweise beinhaltet der Aktuator eine handbetätigte Notentriegelung. Diese handbetätigte Notentriegelung ist vorzugsweise in Ergänzung zur Rückstelleinrichtung vorgesehen. Sie kann im Falle eines Defektes der Rückstelleinrichtung oder bei länger andauerndem Stromausfall verwendet werden um den Aktuator von Hand soweit zurückzustellen, dass eine Entpannung der Kabine möglich wird. Unter Entpannung ist in diesem Zusammenhang ein Zurückholen der Aufzugskabine aus einer blockierten Stellung, wie sie bei einer Notbremsung erfolgt, verstanden. Vorteilhafterweise ist diese Notentriegelung so ausgeführt dass beispielsweise mittels Seilzug auf die Verbindungen eingewirkt wird, welche den Aktuator zur Bremse verbinden.

Eine erfindungsgemäss ausgestattete Aufzugsanlage beinhaltet nun mindestens eine Aufzugskabine, welche entlang von mindestens einer Führungsschiene verfahrbar angeordnet ist, und eine an die Aufzugskabine angebaute Bremseinrichtung. Die Bremseinrichtung beinhaltet mindestens zwei Bremsen wie sie vorgängig beschrieben sind, und die Bremsen wirken bedarfsweise mit jeweils einer Führungsschiene zusammen. Weiter beinhaltet die Aufzugskabine einen Aktuator, wie er in der vorgängigen Beschreibung erläutert ist, und welcher die Bremsen bedarfsweise betätigt.

Gemäß einem weiteren Aspekt der Erfindung ist ein Verfahren zum Betätigen einer Bremseinrichtung beschrieben.

Im Folgenden wird die Erfindung anhand eines Ausführungsbeispieles im Zusammenhang mit den Figuren beispielhaft erläutert.

Es zeigen:
- **Fig. 1**: eine schematische Ansicht einer Aufzugsanlage in der Seitenansicht,
- **Fig. 2**: eine schematische Ansicht der Aufzugsanlage im Querschnitt,
- **Fig. 3**: eine perspektivische Ansicht einer Bremse mit Aktuator an einer Aufzugskabine,
- **Fig. 4**: eine perspektivische Einzelansicht einer Bremse,
- **Fig. 5**: eine Frontansicht der Bremse von Fig. 4 in der Bereitschaftsstellung,
- **Fig. 5a**: eine Ansicht einer Bremsbacke,
- **Fig. 6**: eine Draufsicht der Bremse von Fig. 4,
- **Fig. 7**: eine Frontansicht der Bremse von Fig. 4 in der Einrückstellung
- **Fig. 8**: eine Frontansicht der Bremse von Fig. 4 mit gedrehter Bremsbacke,
- **Fig. 9**: eine Frontansicht der Bremse von Fig. 4 in der Bremsstellung;
- **Fig. 10**: eine perspektivische Einzelansicht eines Aktuators,
- **Fig. 11**: eine Draufsicht des Aktuators in unbetätigter Stellung,
- **Fig. 12**: eine Draufsicht des Aktuators in betätigter Stellung, und
- **Fig. 13**: eine Draufsicht des Aktuators beim Rückstellen.

In den Figuren sind für gleichwirkende Teile über alle Figuren hinweg dieselben Bezugszeichen verwendet.

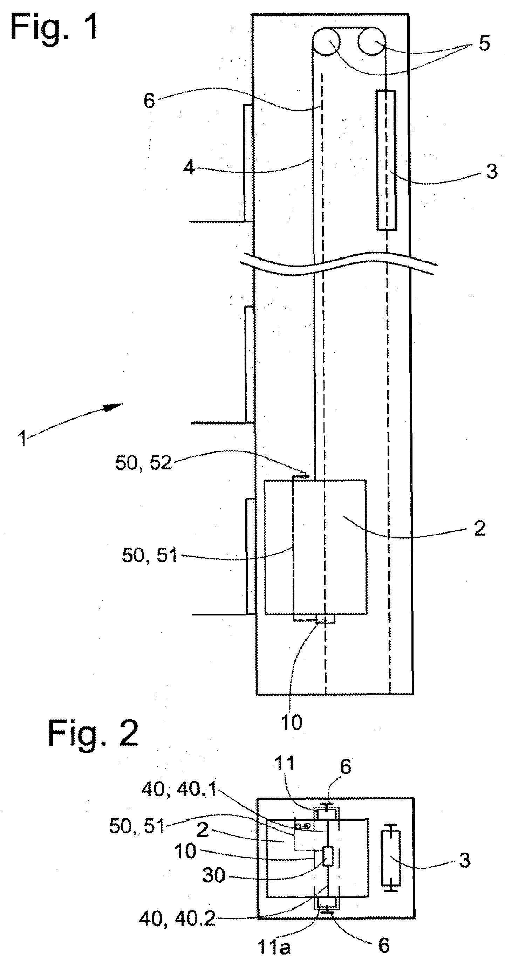

Fig. 1 zeigt eine Aufzugsanlage 1 in einer Gesamtschau. Die Aufzugsanlage 1 ist in einem Gebäude eingebaut, und sie dient dem Transport von Personen oder Gütern innerhalb des Gebäudes. Die Aufzugsanlage beinhaltet eine Aufzugskabine 2, welche sich entlang von Führungsschienen 6 auf- und abwärts bewegen kann. Die Aufzugskabine 2 ist vom Gebäude über Türen zugänglich. Ein Antrieb 5 dient zum Antreiben und Halten der Aufzugskabine 2. Der Antrieb 5 ist im oberen Bereich des Gebäudes angeordnet und die Kabine 2 hängt mit Tragmitteln 4, beispielsweise Tragseile oder Tragriemen, am Antrieb 5. Die Tragmittel 4 sind über den Antrieb 5 weiter zu einem Gegengewicht 3 geführt. Das Gegengewicht gleicht einen Massenanteil der Aufzugskabine 2 aus, so dass der Antrieb 5 zur Hauptsache lediglich ein Ungleichgewicht zwischen Kabine 2 und Gegengewicht 3 ausgleichen muss. Der Antrieb 5 ist im Beispiel im oberen Bereich des Gebäudes angeordnet. Er könnte selbstverständlich auch an einem anderen Ort im Gebäude, oder im Bereich der Kabine 2 oder des Gegengewichts 3 angeordnet sein.

Die Aufzugskabine 2 ist mit einer Bremseinrichtung 10 ausgerüstet, welche geeignet ist um die Aufzugskabine 2 bei einer unerwarteten Bewegung, bei Übergeschwindigkeit oder in einem Halt zu sichern und/oder zu verzögern. Die Bremseinrichtung 10 ist im Beispiel unterhalb der Kabine 2 angeordnet: Die Bremseinrichtung ist elektrisch angesteuert (nicht dargestellt). Ein mechanischer Geschwindigkeitsbegrenzer, wie er üblicherweise verwendet ist, kann deswegen entfallen.

Fig. 2 zeigt die Aufzugsanlage von Fig. 1 in einer schematischen Draufsicht. Die Bremseinrichtung 10 beinhaltet zwei Bremsen 11, 11 a, einen Aktuator 30 und zugehörige Verbindungen 40, 40.1, 40.2. Die beiden Bremsen 11, 11 a sind vorzugsweise baugleich ausgeführt und sie wirken bedarfsweise auf die zu beiden Seiten der Kabine 2 angeordneten Führungsschienen 6 ein. Das heisst, sie sind in der Lage die Kabine 2 an den Schienen 6 abzubremsen und festzuhalten. Die Verbindungen können grundsätzlich als Zug- oder Druckverbindungen ausgeführt sein. In der Regel haben sich jedoch Verbindungen in der Form von Zugverbindungen besser bewährt, da damit eine Gefahr des Ausknickens von Verbindungen beseitigt ist. So haben sich Verbindungen 40 in Form von Zugstangen, Zugseilen, Bowdenkabeln oder ähnlichen Zugmitteln bewährt. Im Beispiel wird ein Aktuator 30 verwendet, der die zugehörigen Verbindungen 40, 40.1, 40.2 bei einer Betätigung im Wesentlichen gegeneinander zieht.

In den Fig. 1 und 2 ist weiter eine optionale Notentriegelung 50 vorgesehen. Die Notentriegelung beinhaltet einen Seilzug 51, welcher unterhalb der Aufzugskabine 2 zum Aktuator 30 verbunden ist und dort eine Entriegelung des Aktuators 30 ermöglicht, wie es später erläutert wird. Oberhalb der Kabine 2, an einer leicht zugänglichen Stelle, ist eine Handkurbel 52 anbringbar. Mit dieser Handkurbel 52 kann im Bedarfsfalle eine Zugkraft über den Seilzug 51 zum Aktuator 30 übertragen werden. Die Handkurbel 52 ist im Normalfall entfernt von der Notentriegelung aufbewahrt, so dass nur instruierte Personen die Notentriegelung betätigen können. Der Seilzug 51 ist über erforderliche Umlenkungen (nicht dargestellt) zum Aktuator 30 geführt. Selbstverständlich können, anstelle des Seilzuges auch ein Bowdenzug oder ein Zuggestänge oder beispielsweise auch eine manuelle hydraulische Verbindung verwendet werden.

Die dargestellten Anordnungen können vom Fachmann auf die Aufzugsanlage angepasst werden. Die Bremsen können oberhalb oder unterhalb der Kabine 2 angebaut sein. Es können auch mehrere Bremspaare an einer Kabine 2 verwendet sein. Selbstverständlich kann die Bremseinrichtung auch bei einer Aufzugsanlage mit mehreren Kabinen verwendet sein, wobei dann jede der Kabinen mindestens eine derartige Bremseinrichtung aufweist. Die Bremseinrichtung kann im Bedarfsfalle auch am Gegengewicht 3 angebaut sein oder sie kann an einer selbstfahrenden Kabine angebaut sein.

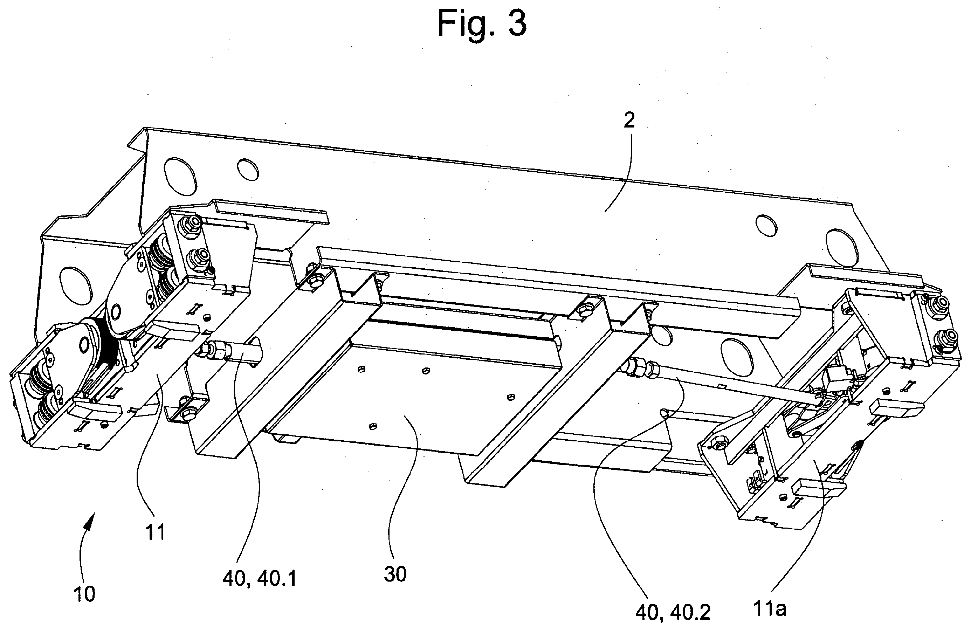

Fig. 3 zeigt eine Tragstruktur einer Aufzugskabine 2 in einer perspektivischen Ansicht von unten. An der linken Seite der Tragstruktur der Kabine 2 ist eine erste Bremse 11 angebaut und an der Gegenseite, in der Figur rechts, befindet sich eine zweite Bremse 11a. Die beiden Bremsen sind baugleich ausgeführt. Zwischen den beiden Bremsen 11, 11a ist der Aktuator 30 ebenso an der Kabine 2 angebaut. Der Aktuator 30 ist über beidseitige Verbindungen 40, im Beispiel sind es Verbindungsstangen, mit den Bremsen 11, 11a verbunden. Die Verbindungen 40 sind vorteilhafterweise einstellbar ausgeführt. Dadurch kann die Bremseinrichtung 10 genau auf eine Breite der Kabine 2 eingestellt werden.

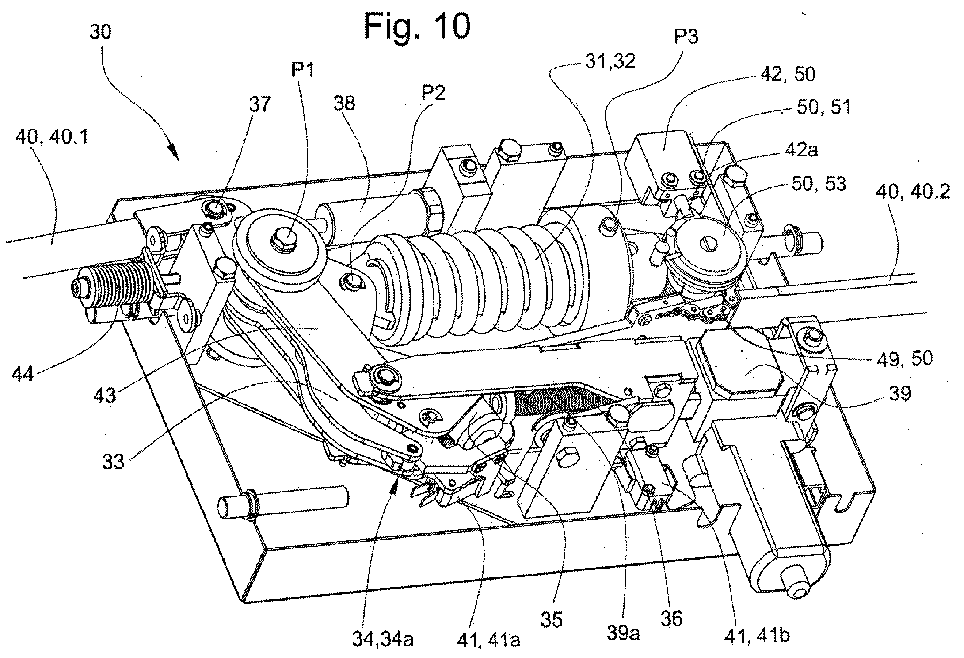

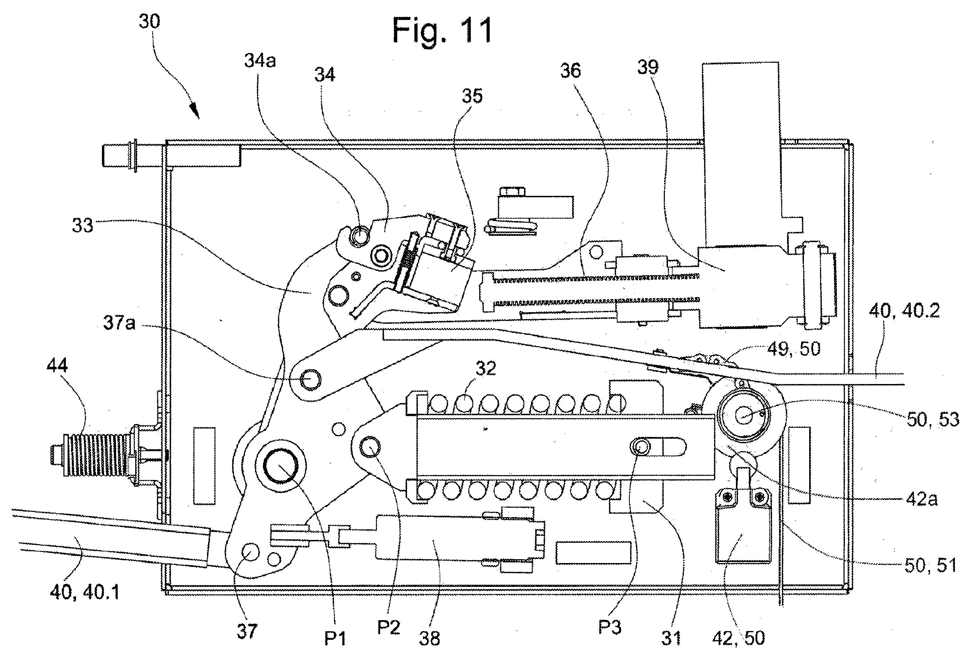

Der Aktuator 30 zieht im Bedarfsfalle die Verbindungen 40 gegeneinander und betätigt dadurch gleichzeitig die beiden Bremsen 11,11 a. Der Aktuator 30 ist horizontal beweglich an der Kabine angeordnet, so dass er sich im Kraftgleichgewicht zwischen den beiden Bremsen 11, 11a im Wesentlichen zentriert. Diese Anordnung ist auch als schwimmende Lagerung bezeichnet. Der Aktuator 30 ist dazu beispielsweise auf horizontalen Gleitstücken oder Gleitstangen angeordnet. Eine Positioniereinrichtung 44 (siehe Fig. 10 und 11) hält dabei den Aktuator 30 mit geringer Kraft in einer definierten Lage.
Im Beispiel gemäss Fig. 3 ist der Aktuator 30 aussermittig angeordnet. Dadurch kann eine Seite der Verbindungen 40, beispielsweise eine erste Verbindung 40.1, standardmässig vorgefertigt sein und lediglich die gegenseitige zweite Verbindung 40.2 ist an eine Abmessung der Kabine 2 anzupassen. Da die Funktion der beiden Bremsen 11, 11a identisch ist, wird diese im Folgenden nur noch anhand der Bremse 11 erläutert.

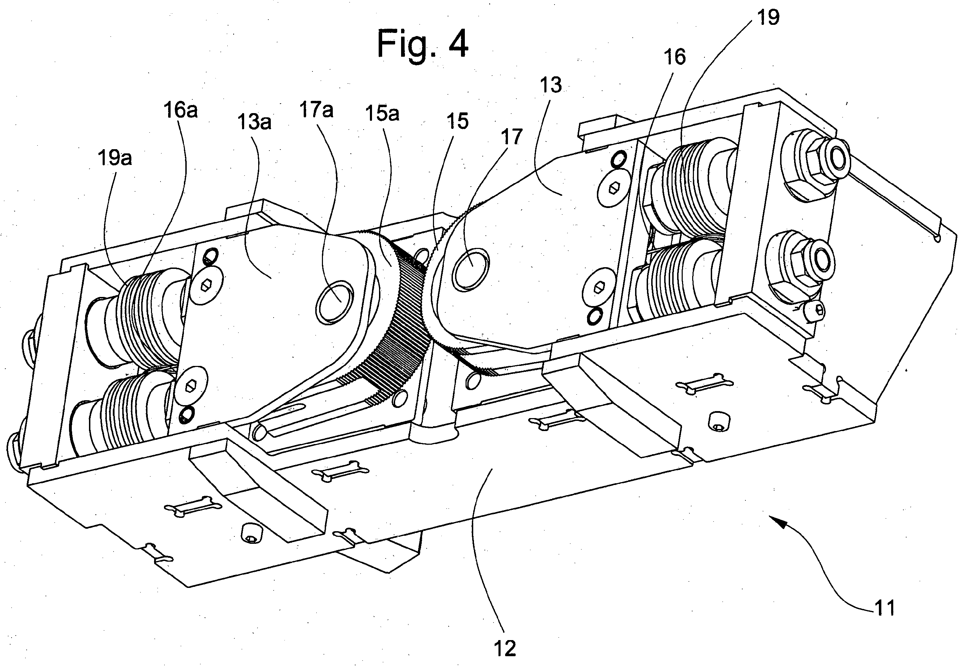

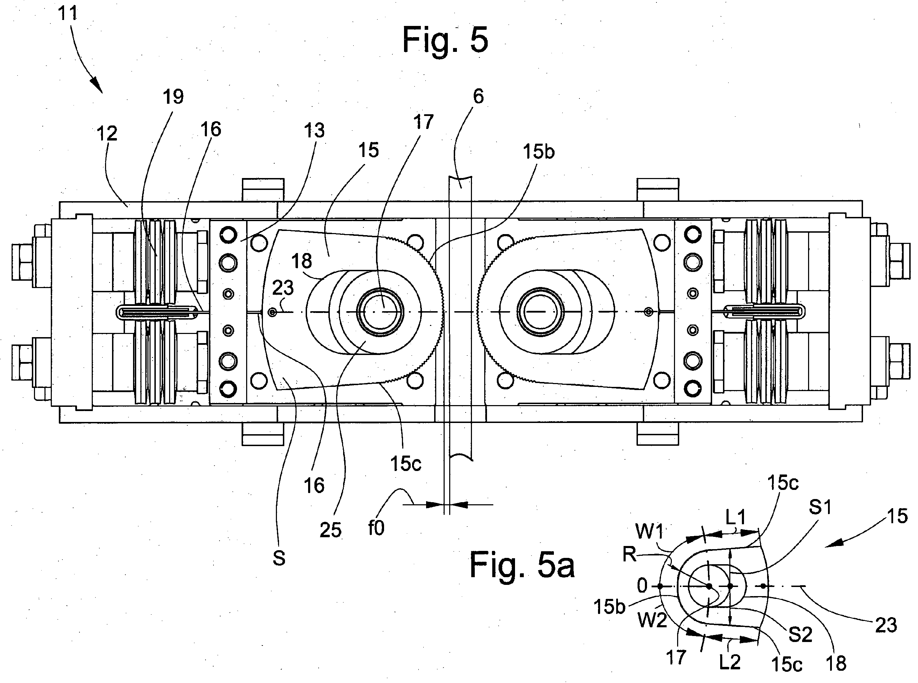

Die Fig. 4 und 5 zeigen ein Beispiel einer Bremse 11 in der so genannten Bereitschaftsstellung oder auch in ihrer unbetätigten Stellung. Die Bremse 11 ist in sich wiederum im Wesentlichen symmetrisch aufgebaut. So befinden sich in einem Bremsgehäuse 12 ein linker und ein rechter Bremsbackenschlitten 13, 13a, eine linke und eine rechte Bremsbacke 15, 15a, u.s.w. Im Folgenden wird der Aufbau und die Funktion lediglich anhand der einen Seite erklärt.

Die Bremse 11 beinhaltet somit das Bremsgehäuse 12, den Bremsbackenschlitten 13 mit Bremsbacke 15, eine Rückzugeinrichtung 16 und einen Druckfederblock 19. Der Bremsbackenschlitten 13 beinhaltet die Bremsbacke 15.

In Fig. 5a ist eine Bremsbacke 15 im Detail dargestellt. Die Bremsbacke 15 hat einen ersten Teilbereich 15b. In diesem ersten Teilbereich 15b ist die Bremsbacke 15 im Wesentlichen kreis- oder spiralförmig ausgeführt. Der erste Teilbereich 15b ist mit einer Rändelung versehen um eine gute Griffigkeit zu erzielen. Die kreisförmige Kurvenform des ersten Teilbereichs 15b ist derart ausgeführt, dass sich ein Abstand R der Kurve zu einer Lagerachse 17 in Abhängigkeit eines Drehwinkels W1, W2 kontinuierlich, wie bei eine Spirale, vergrössert. Ausgehend von der Lagerachse 17 weist die Bremsbacke 15 ein Langloch 18 auf, welches sich entlang einer Längsachse 23 erstreckt. Anschliessend an den ersten Teilbereich 15b der Bremsbacke 15 schliesst ein zweiter Teilbereich 15c mit einer geradlinigen Form an. Die geradlinige Form des zweiten Teilbereichs 15c ist derart ausgeführt, dass sich ein Abstand S1, S2 der geradlinigen Form zur Längsachse 23 in Abhängigkeit einer Längsverschiebung L1, L2 weiter vergrössert. Der zweite Teilbereich 15c ist als Gleit-/Bremsbereich ausgebildet. Dies kann ein keramischer Reibbelag sein, welcher auf den Bremsbackenkörper aufgebracht ist. Im ausgeführten Beispiel ist der zweite Teilbereich 15c einstückig in die Bremsbacke 15 integriert, und sie besteht aus gehärtetem Stahl. Die Bremsbacke hat eine Dicke s von etwa 15 bis 30 mm, so dass sie beim Eingriff mit der Führungsschiene 6 eine ideale Bremspaarung bilden kann.

Die derartig geformte Bremsbacke 15 ist im Bremsbackenschlitten 13 über die Lagerachse 17 eingebaut. Der Bremsbackenschlitten 13 hat Seitenbleche 24, welche die Lagerachse 17 stützen. Die Bremsbacke 15 ist über ein Dreh-Gleitlager 25 auf der Lagerachse 17 angeordnet. Die Bremsbacke 15 kann dadurch auf der Lagerachse 17 gedreht werden und sie kann im Bereiche des Langlochs 18 auch längsverschoben werden.

Eine Rückzugeinrichtung 16 (siehe Fig. 4 und 5) greift an der Bremsbacke 15 an und zieht die Bremsbacke 15 in eine horizontale Lage und gleichzeitig den gesamten Bremsbackenschlitten 13 an einen Anschlag. Dieser Anschlag wird durch den Druckfederblock 19 gebildet. Der Druckfederblock 19 beinhaltet mehrere Druckfedern 20 welche im Druckfederblock 19 auf eine vordefinierte Vorspannkraft vorgespannt sind. In dieser Bereitschaftsstellung ergibt sich so ein Luftspalt f0 von etwa 3 mm. Dieser Luftspalt ist eine freie Distanz zwischen der Bremsbacke 15 und der Führungsschiene 6. Er wird vom Fachmann unter Berücksichtigung von Führungsungenauigkeiten gewählt.

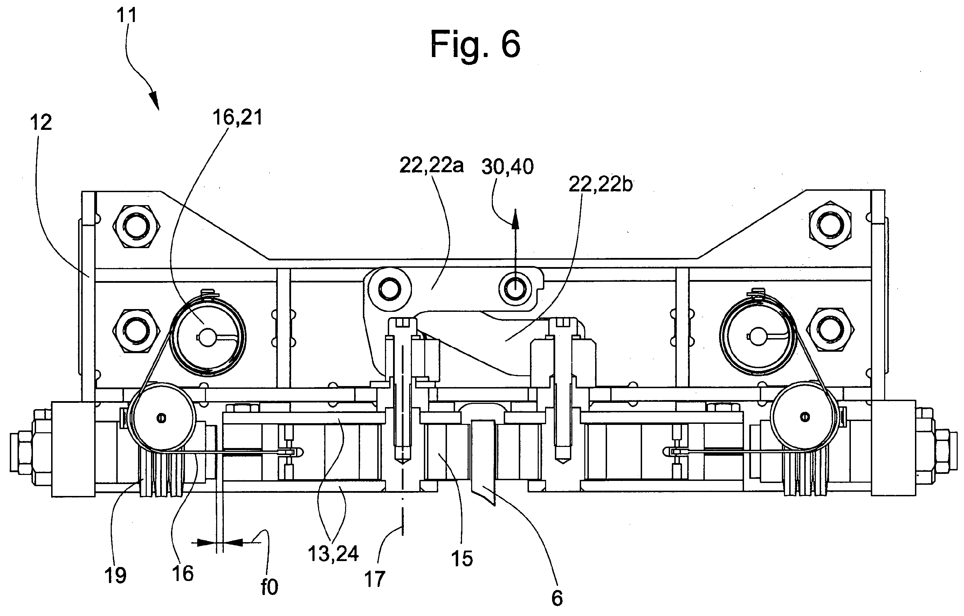

Die Rückzugeinrichtung - 16 ist, wie speziell in Fig. 6 ersichtlich, eine Federeinrichtung 21, im Besonderen eine Spiralfeder, welche über Umlenkungen, mittels eines Zugkabels an der Bremsbacke angreift und diesen entsprechend zurückzieht.

Typischerweise liegt eine von der Rückzugseinrichtung bewirkte Rückzugskraft bei ungefähr 40 Newton.

Weiter beinhaltet die Bremse 11 eine Zustelleinrichtung 22, welche im Bedarfsfalle den Bremsbackenschlitten 13, bzw. die zwei Bremsbackenschlitten 13, 13a zur Führungsschiene 6 zustellen kann, also den Luftspalt f0 aufheben kann. Die Zustelleinrichtung 22 umfasst einen Hebelsupport 22b, welcher im Wesentlichen fest auf einem der Bremsbackenschlitten 13a befestigt ist und welcher einen Lagerpunkt zur Aufnahme eines ersten Hebels 22a aufweist. Der erste Hebel 22a ist derart gestaltet, dass er mit einem Ende auf eine Andrückplatte des anderen Bremsbackenschlittens 13 drücken kann. Das andere Ende des ersten Hebels 22a ist mittels der Verbindung 40 zum Aktuator 30 verbunden. Sobald der Aktuator am ersten Hebel 22a zieht, drückt er die beiden Bremsbackenschlitten 13, 13a gegeneinander und hebt den Luftspalt f0 auf, womit die Einrückstellung erreicht wird. In Fig. 6 befindet sich die Bremse in dieser Einrückstellung. Der Luftspalt im Bereiche der Führungsschiene 6 ist aufgehoben und der Bremsbackenschlitten 13 ist soweit zugestellt, dass sich zwischen Druckfederblock 19 und Bremsbackenschlitten 13 ein Spalt entsprechend dem Luftspalt f0 einstellt.

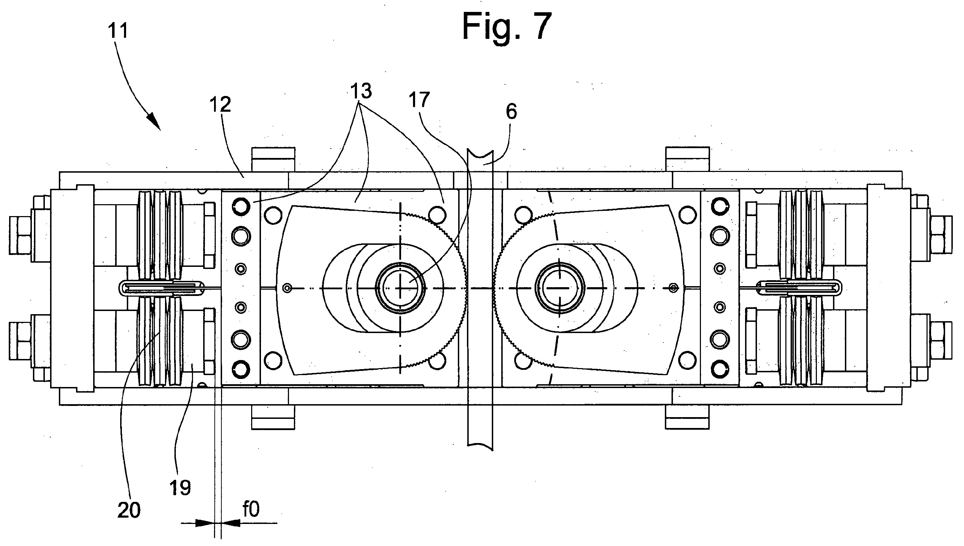

Fig. 7 zeigt die Bremse ebenfalls in der Einrückstellung. Die Bremsbackenschlitten 13 sind derart gegeneinander gedrückt, dass die Bremsbacken 15 die Führungsschiene 6 klemmen. Dabei ist ersichtlich, dass der Bremsbackenschlitten 13 nun nicht mehr am Druckfederblock 19 anliegt, sondern dass sich zwischen Druckfederblock 19 und Bremsbackenschlitten 13 ein Spalt, entsprechend dem Luftspalt f0 ergibt.

Sofern sich die Aufzugskabine 2 im Stillstand befindet verharrt die Bremse 11 in dieser Einrückstellung. Bei einem Zurückstellen der Zustelleinrichtung 22 können die Bremsbackenschlitten 13, 13a durch die Rückzugeinrichtung 16 direkt wieder in ihre Bereitschaftsstellung zurückgezogen werden und die Kabine 2 ist damit für eine Fahrt freigegeben. Sofern sich die Kabine 2 jedoch unbeabsichtigt fortbewegt wird die Bremse 11 selbsttätig in Bremsstellung bewegt.

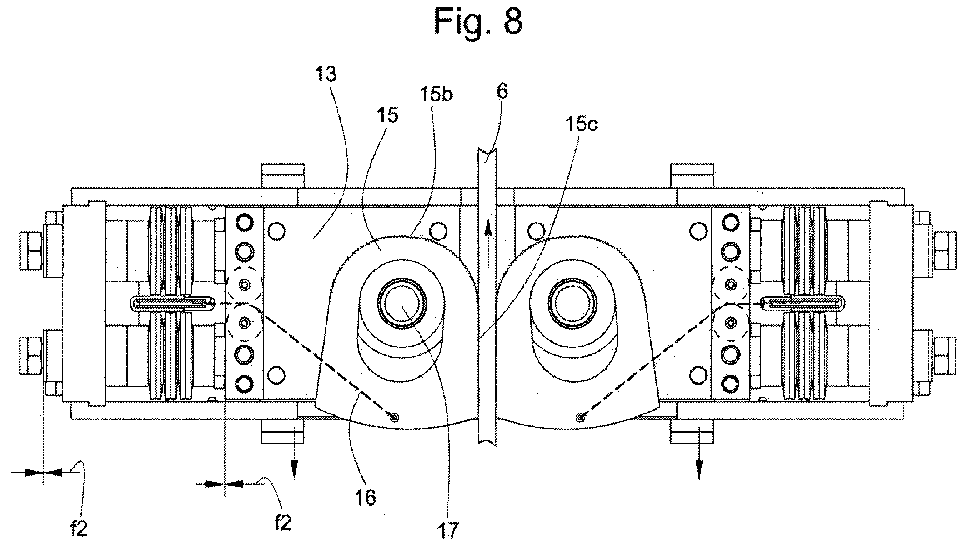

In Fig. 8 hat sich nun die Kabine 2 bzw. die Bremse 11 in Relation zur Führungsschiene 6 nach unten bewegt. Die Bremsbacke 15 wird durch die Führungsschiene 6, bzw. deren Führungsschienenfläche, auf der Lagerachse 17, entlang des ersten Teilbereichs 15b, verdreht und liegt nun mit dem zweiten Teilbereich 15c an der Führungsschiene 6 an. Bedingt durch den ansteigenden Radius des ersten Teilbereichs 15b wird der Bremsbackenschlitten 13 zurückgedrückt. Dadurch wird der vorgängige Luftspalt f0 zwischen Bremsbackenschlitten 15 und Druckfederblock 19 aufgehoben, und im Beispiel wird der Druckfederblock 19 bereits um einen minimalen Betrag f2 vorgespannt. Bis zur Aufhebung des Luftspaltes f0 entsteht noch keine massgebende Bremskraft, da noch keine Nachspannung des Druckfederblocks 19 erfolgt. Es wäre, während diesem Arbeitsbereich also stets möglich, den Bremsbackenschlitten 13 durch die Zustelleinrichtung 22 und Rückzugeinrichtung 16 in die Bereitschaftsstellung zurückzuziehen und die Bremse 11 wieder freizugeben. Dies ist hilfreich, wenn mit dieser Bremse 11 ein Wegrutschen der Kabine 2 während dem Beladen begrenzt werden soll. Ein solches Wegrutschen kann beispielsweise bei einem Überladen der Kabine 2 passieren oder auch bei einem Defekt von Aufzugsbauteilen.

Somit kann die Bremse 11 in einer Haltestelle vorbeugend in die Einrückstellung gebracht werden und sie verhindert dadurch ein gefährliches Wegrutschen. Sofern ordnungsgemäss kein Rutschen stattfindet, kann die Bremse 11 vor einem Wegfahren einfach wieder zurückgestellt werden.

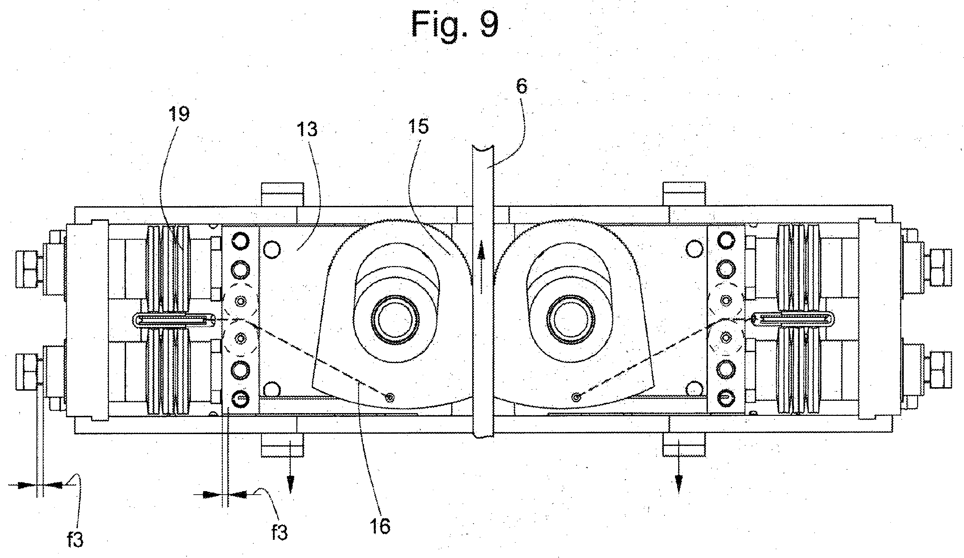

Bewegt sich nun die Kabine 2 weiter, bleibt die Bremsbacke 15, wie in Fig. 9 dargestellt, durch die Reibwirkung zwischen dem zweiten Teilbereich 15c und der Führungsschiene 6, auf der Schiene 6 haften. Die Bremse 11 rollt, über das Dreh- Gleitlager der Lagerachse 17, dem Langloch 18 entlang, und der Bremsbackenschlitten 13 wird entsprechend der Abstandsvergrösserung S1 des zweiten Teilbereichs 15c weiter zurückgeschoben. Dadurch wird der Druckfederblock 19 weiter nachgespannt, bis er seine Endspannung, entsprechend einer Einfederung f3, erreicht. Diese Einfederung f3 bewirkt eine zugehörige Andrückkraft welche nun die Bremsung der Aufzugskabine 2 bewirkt. Die Hebel der Zustelleinrichtung 22 oder der Aktuator 30 sind derart ausgeführt, dass sie diese Einfederung f3 ertragen können. Dies kann durch einen Freilauf, Spiel oder elastische Bereiche erzielt werden.

Um die Bremse nach erfolgtem Stillstand der Aufzugskabine 2 wieder zurückstellen zu können, muss die Kabine 2 zurückgefahren werden, womit der Einrückvorgang in umgekehrter Reihenfolge stattfindet. Dabei wird vor einem Rückstellen der Kabine 2 die Zustelleinrichtung 22 zurückgestellt. Dadurch wird beim Zurücksetzen der Kabine 2 die Bremsbacke 15 und der Bremsbackenschlitten 13 direkt in der Bereitschaftsstellung gehalten.

Durch die Ausführung der Bremsbacke 15 findet dieser vorgehend beschriebene Zustell- und Einrückvorgang in beiden Fahrtrichtungen statt, wobei sich Einfederungen f1 bis f3 entsprechend der Form der Bremsbacke 15, bzw. der Ausführung des ersten und zweiten Teilbereichs 15b, 15c der Bremsbacke 15, ergeben. Bei einer Abbremsung in Aufwärtsrichtung sind naturgemäss kleinere Bremskräfte erforderlich. Dies wird Berücksichtigt, indem die Einfederwege, in Aufwärtsrichtung, kleiner gewählt werden.

Es ist selbstverständlich, dass jeweilige Bremslagen und Zustände der Zustelleinrichtung elektrisch, bzw. durch Positionsdetektoren, erfasst werden. Diese Zustandsangaben werden in einer Steuerung verarbeitet und als Fehlerhinweise oder zur Folgesteuerung des Aufzuges weiterverwendet.

Fig. 10 bis 13 zeigen ein Beispiel eines Aktuators 30, wie er zur Betätigung einer Bremse 11, wie in den vorgehenden Figuren erläutert, verwendet werden kann. Der Aktuator hält einerseits die Bremse 11 einer Aufzugskabine, bzw. die Bremseinrichtung in einer Bereitschaftsstellung, bzw. in ihrer unbetätigten Stellung (siehe Fig. 11). Dieser Zustand ist als geschlossene Stellung des Aktuators 30 bezeichnet. Der Aktuator 30 bringt die Bremse 11 im Bedarfsfalle von der Bereitschaftsstellung in eine Einrückstellung. Der Aktuator 30 setzt die Bremse 11, bzw. eine entsprechende Zustelleinrichtung 22 auch wieder in eine Stellung zurück, die ein Zurückstellen der Bremse 11 in die Bereitschaftsstellung ermöglicht. Der Aktuator 30 verfügt dazu über elektrische Schnittstellen zu einer Steuerung, welche beispielsweise die entsprechenden Steuerbefehle übermittelt oder allfällige Zustandsrückmeldungen des Aktuators 30 und / oder der Bremse 11 aufnimmt. Weiter sind allenfalls erforderliche Stromspeicher vorhanden um eine Funktion im Falle von Energieausfall sicherzustellen.

Der Aktuator 30 beinhaltet einen Kraftspeicher 31, eine Halteeinrichtung 34, eine Rückstelleinrichtung 36 und eine, bzw. zwei Verbindungsstellen 37, 37a welche den Aktuator 30 zur, bzw. zu mindestens zwei Bremsen 11, bzw. deren Zustelleinrichtungen 22 verbinden.

Der Kraftspeicher 31 ist vorzugsweise ein Federspeicher 32, welcher an einem Ende mittels eines Abstützpunktes P3 in einem Gehäuse des Aktuators 30 abgestützt ist, und dessen anderes Ende über einen Angriffspunkt P2 gegen einen Betätigungshebel 33 drückt. Der Betätigungshebel 33 ist mittels eines Drehpunktes P1 drehbar im Gehäuse gelagert, und die Halteeinrichtung 34 hält mittels einer Klinke, welche einen Riegel 34a greift, den Betätigungshebel 33 entgegen der Federkraft des Kraftspeichers 31 in der geschlossenen Stellung, entsprechend der Bereitschaftsstellung der Bremse 11. Der Riegel 34a ist hierbei vorteilhafterweise ein drehbarer Bolzen oder eine Büchse, welcher oder welche in die hakenförmige Klinke der Halteeinrichtung 34 eingehängt ist. Diese Ausführung ergibt konstante Reibverhältnisse und damit ein reproduzierbares, konstantes Auslöseverhalten.

Der Betätigungshebel 33 ist mit einer ersten Verbindungsstelle 37 an eine erste Verbindung 40, 40.1 angeschlossen und mit einer zweiten Verbindungsstelle 37a an eine zweite Verbindung 40, 40.2 angeschlossen. Die Verbindungen 40 führen, wie im Zusammenhang mit Fig. 3 beschrieben, zu den beidseitigen Bremsen 11, 11a.

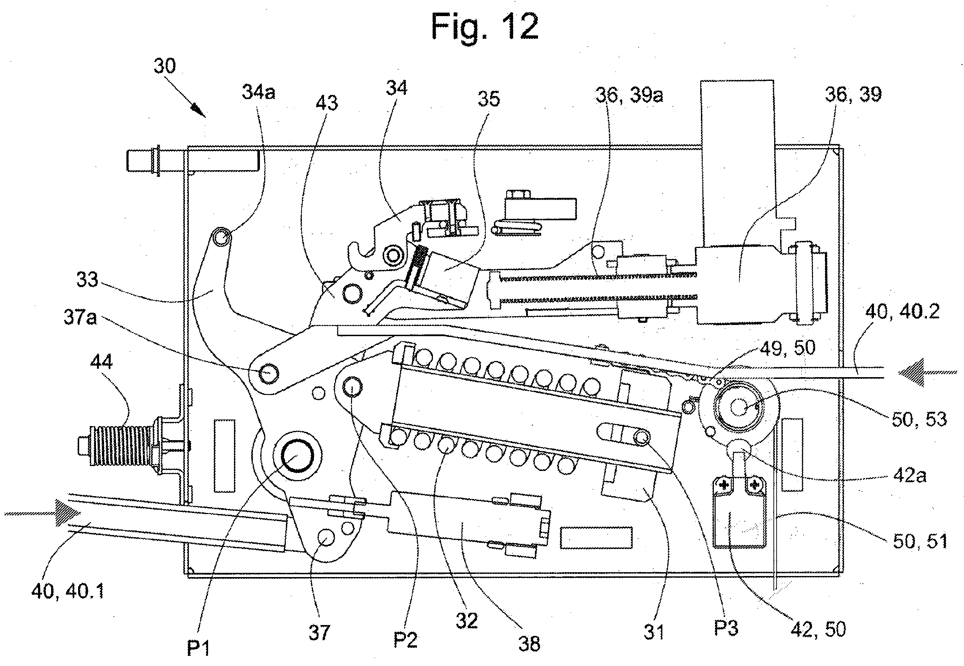

Die Halteeinrichtung 34 beinhaltet einen Elektromagneten 35, welcher die Halteinrichtung 34 in der geschlossenen Stellung hält. Wird der Elektromagnet 35 stromlos geschalten, drückt der Kraftspeicher 31 die Klinke der Halteeinrichtung 34 zurück, wodurch der Riegel 34a des Betätigungshebels 33 freigegeben wird (siehe Fig. 12). Der Kraftspeicher 31 drückt den Betätigungshebel 33 in die Einrückstellung, wodurch die beiden Verbindungsstellen 37, 37a in einer Projektion betrachtet gegeneinander gezogen werden. Dies bedeutet, dass im Besonderen die Verbindungen 40, 40.1, wie in Fig. 12 mit Bewegungspfeilen dargestellt, im Wesentlichen gegeneinander gezogen werden, wodurch Anschlusspunkte der Verbindungen 40. 40.1 an die jeweiligen Zustelleinrichtungen 22 der Bremsen 11 gegeneinander gezogen bzw. gegeneinander bewegt werden. Dieses Zusammenziehen wird auf die Zustelleinrichtung 22 der Bremse11 (siehe Fig. 6) übertragen. Eine Kraft des Kraftspeichers 31 bestimmt in dieser Anordnung über Hebelwirkungen der Zustelleinrichtung 22 der Bremse 11 eine Andrückkraft des Bremsbackenschlittens 13 an die Führungsschiene 6. Erfahrungsgemäss beträgt diese Andrückkraft ungefähr 800 Newton. Damit kann sichergestellt werden, dass die Bremsbacke 15 im Bedarfsfalle selbsttätig einrückt, wenn die Kabine 2 in Bewegung ist.

Vorteilhafterweise sind Hebelabstände und Hebelwirkungslinien am Betätigungshebel 33, das heisst der Angriffspunkt P2 des Kraftspeichers 31 in Bezug zum Drehpunkt P1 des Betätigungshebels 33 und zum Abstützpunkt P3 des Kraftspeichers 31 im Gehäuse des Aktuators 30 sowie zu den Verbindungsstellen 37, 37a, so angeordnet, dass sich bei Betätigung des Aktuators 30 eine über einen Betätigungshub im Wesentlichen konstante Zugkraft in den Verbindungen 40 ergibt. Dies ist beispielsweise dadurch erreicht, dass ein Hebelabstand, der durch den Angriffspunkt P2 und den Abstützpunkt P3 bestimmten Kraftwirklinie zum Drehpunkt P1 des Betätigungshebels 33, in der unbetätigten Stellung klein ist, so dass er sich bei der Betätigung, wegen der Drehung des Betätigungshebels 33, vergrössert. Damit wird eine Entspannung des Kraftspeichers 31, beispielsweise wegen einer Entspannung des Federspeichers 32, durch die Vergrösserung des Hebelabstandes kompensiert.

Die Form der Klinke der Halteeinrichtung 34, der Riegel 34a, eine Haltekraft des Elektromagneten 35 und der Kraftspeicher 31 sind im Weiteren vorteilhafterweise derart aufeinander abgestimmt, dass bei eingeschaltetem Elektromagneten 35 der Betätigungshebel 33 in der geschlossenen Stellung gehalten ist, und bei abgeschaltetem Elektromagneten 35 der Kraftspeicher 31 die Halteeinrichtung 34 sicher zurückdrücken kann. In einer ausgeführten Anwendung beträgt die Haltekraft des Elektromagneten typischerweise etwa 160 Newton. Ein derartiger Elektromagnet benötigt eine kleine Leistung von lediglich etwa 2.5 Watt. Die Bremseinrichtung kann somit mit einem sehr geringen Energieverbrauch betrieben werden.

Vorteilhafterweise ist die Halteinrichtung 34 so ausgeführt, dass sie nach der Auslösung, beispielsweise durch eine Hilfsfeder, in eine Offen-Position gedrückt wird. Dadurch wird ein Zurückschlagen der Halteinrichtung 34 verhindert.

Vorteilhafterweise verfügt der Aktuator über eine Dämpfeinrichtung 38, welche dämpfend auf den Bewegungsablauf beim Zustellen wirkt. Die Dämpfeinrichtung 38 - dies kann eine hydraulische, eine pneumatische oder eine magnetische Dämpfeinrichtung sein - ist vorzugsweise so eingestellt, dass sie eine Bewegung im Endbereich des Zustellweges abbremst um damit einen Endaufprall der Bremsbacken auf die Schiene zu dämpfen. Damit kann eine Geräuschentwicklung und auch eine Schlagbeanspruchung des Materials verringert werden. Die Dämpfeinrichtung 38 wirkt vorteilhafterweise direkt auf den Betätigungshebel 33. Selbstverständlich kann die Dämpfeinrichtung 38 auch im Kraftspeicher 31 integriert sein.

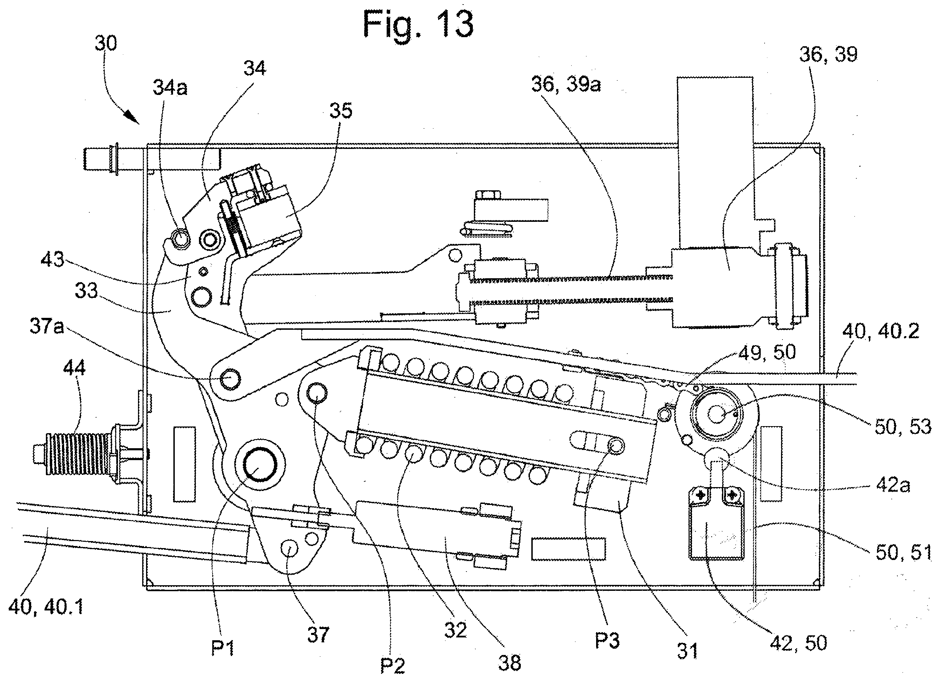

Der Aktuator kann, wie in Fig. 13 dargestellt, nach einer Betätigung wieder in seine Bereitschaftsstellung zurück gespannt werden. Diese Rückstellung kann automatisch, beispielsweise durch eine Bremssteuereinrichtung, oder manuell erfolgen. Bei einer automatischen Rückstellung prüft beispielsweise die Bremssteuereinrichtung oder eine entsprechende Sicherheitseinheit - bei Vorliegen eines Fahrbefehls - den Zustand der Anlage und initialisiert bei entsprechend positivem Befund einen Rückstellbefehl an den Aktuator. Eine manuelle Rückstellung kann erforderlich sein, wenn die Bremseinrichtung wegen eines Fehlers betätigt wurde, um die Kabine beispielsweise bei einer unkontrollierten Bewegung stillzusetzen. Dies bedingt in der Regel den Eingriff einer Fachperson, die dann die Rückstellung des Aktuators 30 manuell, beispielsweise durch Betätigen einer Schalteinrichtung oder, wenn beispielsweise keine elektrische Energie zur Verfügung steht, mittels der Notentriegelung 50 ausführt. Die Schalteinrichtung ist vorteilhafterweise derart ausgeführt, dass bei einem Loslassen der Schalteinrichtung die Bremseinrichtung wieder betätigt wird.

Zur Rückstellung des Aktuators 30, mittels der Schalteinrichtung, verfügt der Aktuator 30 über die Rückstelleinrichtung 36. Die Rückstelleinrichtung 36 besteht aus einem Spindelantrieb mit Getriebemotor 39, welcher eine Spindel 39a treibt. Die Halteeinrichtung 34 mit Elektromagnet 35 ist durch die Spindel 39a verfahrbar. Zur Rückstellung wird die Halteeinrichtung 34 mittels der Spindel 39a ausgefahren und die Klinke der Halteinrichtung 34 fasst den ausgelösten Betätigungshebel 33, bzw. den Riegel 34a. Mit dem Elektromagneten 35 wird dann die Halteinrichtung 34 zurückgehalten. Durch Umschalten des Getriebemotors 39 wird nun die Halteeinrichtung 34 mit eingeklinktem Betätigungshebel 33 in die Bereitschaftsstellung (siehe Fig. 11) zurückgezogen. Die Halteinrichtung 34 wird, zusammen mit dem Elektromagneten 35, durch einen Führungshebel 43, während dem Verfahren zum Betätigungshebel 33, in der richtigen Position geführt. Dadurch kann der Elektromagnet 35 bei Erreichen des Betätigungshebels 33 eingeschalten werden, wodurch die Halteeinrichtung 34 den Betätigungshebel fasst und mittels Riegel 34a hält. Durch diese Anordnung ist sichergestellt, dass der Aktuator 30 jederzeit - auch während dem Zurückstellen - direkt wieder betätigt werden kann.

Der Ablauf der Rückstellung, bzw. der Bewegungsablauf des Getriebemotors 39 ist durch Schalter 41 gesteuert. Ein erster Schalter 41 a erkennt im Beispiel die Stellung der Halteeinrichtung 34. Hat der Elektromagnet 35 die Halteinrichtung 34 angezogen befindet sich der erste Schalter 41 a in geschlossenem Zustand. Ein zweiter Schalter 41 b erkennt eine Lage des Getriebemotors 39, bzw. der Spindel 39a, die der Betriebsposition entspricht. In der Bereitschaftsstellung des Aktuators 30 entsprechend Fig. 10 und 11 sind somit beide Schalter 41 a, 41 b geschlossen. Wird der Aktuator 30 betätigt, öffnet die Halteeinrichtung 34 und gibt den Betätigungshebel 33 frei. Gleichzeitig öffnet der erste Schalter 41a. Ein geöffneter erster Schalter 41 a bei gleichzeitig geschlossenem zweiten Schalter 41 b bedeutet, der Aktuator 30 ist betätigt. Zur Rückstellung wird die Spindel 39a, wie bereits beschrieben, ausgefahren bis die Halteeinrichtung 34 angezogen werden kann. Dies wird durch den ersten Schalter 41 a festgestellt, wodurch der Getriebemotor 39 umgesteuert und somit die Halteeinrichtung 34 mit eingeklinktem Betätigungshebel 33 in die Bereitschaftsstellung zurückgezogen wird. Sobald der zweite Schalter 41 b geschlossen wird, bedeutet dies, dass die Bereitschaftsstellung erreicht ist und der Getriebemotor 39 wird ausgeschalten. Der Getriebemotor 39 mit der Spindel 39a ist selbsthemmend ausgeführt. Somit ist die Positionierung der Halteeinrichtung 34 mit eingeklinktem Betätigungshebel 33 durch die Rückstelleinrichtung 36 selbst bestimmt.

Die Anordnung der Schalter 41 ermöglicht auch einen sicheren Bewegungsablauf, beispielsweise nach einem Stromunterbruch, während der Rückstellung. Sind beispielsweise bei einer Inbetriebnahme nach einem Stromunterbruch beide Schalter 41 geöffnet, wird der Getriebemotor 39 zuerst zurück in die Betriebsposition gefahren. Sofern nun eine Sicherheitsüberwachung ein entsprechendes Bereitschaftssignal abgibt, dabei jedoch der erste Schalter 41 a noch wie vor geöffnet ist, kann automatisch die Rückstellung des Aktuators 30 entsprechend dem vorgängig beschriebenen Vorgang erfolgen, bzw. initialisiert werden.

Selbstverständlich können auch die Arbeitsstellungen des Aktuators selbst mit weiteren Schaltern (nicht dargestellt) überwacht werden, so dass Steuereinrichtungen über entsprechende Zustandsinformationen verfügen.

Der in den Fig. 10 bis 13 sowie in Fig. 1 ersichtliche Aktuator 30 verfügt über eine optionale Notentriegelung 50. Diese Notentriegelung 50 ermöglicht eine Rückstellung des Aktuators 30 derart, dass eine allenfalls manuelle Entpannnung einer blockierten Aufzugskabine 2 ermöglicht ist. Im Beispiel ist die zweite Verbindung 40.2 mittels einer Zugkette 49 zu einer Seiltrommel 53 verbunden. Die Seiltrommel 53 ist über den Seilzug 51 zur Handkurbel 52 (siehe Fig. 1) verbunden. Die Handkurbel 52 ist im Beispiel auf einem Dach der Kabine 2, in der Nähe einer vorderen Schachtwand angeordnet. Im Bedarfsfalle kann über die Handkurbel 52, welche zu diesem Zweck auf einen entsprechenden Seilzugwickel aufgesteckt werden kann, die Seiltrommel 53 verdreht werden, so dass die mit der Seiltrommel 52 verbundene Zugkette 49 über die zweite Verbindung 40.2 den Betätigungshebel 33 zurückzieht. Damit kann der Aktuator 30 mindestens soweit zurückgesetzt werden, dass die Bremsen 11, 11a freigegeben sind, und dass somit die Kabine 2 entpannt, das heisst aus einer blockierten Bremsstellung herausbewegt, werden kann. Nach dieser Notentriegelung wird die Handkurbel 52 wieder entlastet, wodurch, vorteilhafterweise mittels einer in der Seiltrommel 53 integrierten Feder, die Seiltrommel 53 so zurückgedreht wird, dass die Zugkette 49 entlastet ist. Die Stellung der Seiltrommel ist vorteilhafterweise mit einem dritten Schalter 42 überwacht.

In der unbetätigten Stellung des Aktuators 30, wie in den Fig. 10 und 11 dargestellt, ist die Seiltrommel 53 zurückgedreht und der Seilzug 51 und auch die Zugkette 49 sind entlastet. Die Zugkette 49 ist lose, so dass sie eine Betätigung des Aktuators 30 nicht behindert. Der dritte Schalter 42 ist nicht betätigt, das bedeutet, die Notentriegelung 50 ist nicht betätigt.

In den Fig. 12 und 13 ist der Aktuator 30 betätigt. Dementsprechend ist die Zugkette 49 der Notentriegelung im Wesentlichen gespannt. Im Bedarfsfalle kann nun durch Ziehen am Seilzug 51 die Verbindung 40.2 gezogen werden. Beim Verdrehen der Seiltrommel 53 wird ein Schaltstössel 42a des Schalters 42 zurückgedrückt. Ein elektrisches Betreiben der Aufzugsanlage wird dann beispielsweise unterbrochen bis die Seiltrommel 53 wieder entlastet ist.

Bei Kenntnis der vorliegenden Erfindung kann der Aufzugsfachmann die gesetzten Formen und Anordnungen beliebig verändern. Beispielsweise können, anstelle der gezeigten symmetrischen Anordnung mit zwei Bremsbackenschlitten 13, 13a und zwei Druckfederblocks 19, 19a, auch nur einseitig angeordnete Druckfederblocks 19 verwendet werden, während die andere Seite beispielsweise starr abgestützt ist, oder es kann einem starr abgestützten Bremsbackenschlitten 13 eine auf einen Druckfederblock 19a gestützte, feste Bremsplatte entgegengesetzt werden.

Auch die in der Beschreibung des Aktuators 30 vorzugsweise verwendeten Teile, wie Zugkette und Zugseil, können vom Fachmann durch gleichwirkende Teile, wie andere Zug- oder allenfalls Druckmittel, ersetzt werden oder anstelle von Seiltrommeln und Wickeln können entsprechende Hebelsysteme verwendet sein. Auch die in der Beschreibung erwähnten Werte, wie beispielsweise die Haltekraft des Elektromagneten, usw. sind informativ. Sie werden vom Fachmann unter Berücksichtigung der gewählten Materialien und Formen festgelegt.

Alternativ können beispielsweise die Verbindungen 40, 40.1 auch gegeneinander gezogen werden, indem ein Hebelsystem in der Form eines Rhombus verwendet wird. Ein Kraftspeicher drückt dabei Bedarfsweise zwei gegenüberliegende Eckpunkte des Rhombus auseinander. wodurch zwangsläufig die zwei übrigen Eckpunkte des Rhombus zusammen gezogen werden. Die Verbindungen 40, 40.1 sind dabei an diese zwei übrigen Eckpunkte des Rhombus gekoppelt.

## Patentansprüche

1. Aktuator für den Anbau an eine Aufzugskabine (2) einer Aufzugsanlage (1) und geeignet zum Betätigen einer Bremseinrichtung (10) mit mindestens zwei Bremsen (11, 11a), beinhaltend:
einen Kraftspeicher (31),
eine Halteeinrichtung (34),
eine Rückstelleinrichtung (36) und
mindestens zwei Verbindungsstellen (37, 37a) zum Verbinden des Aktuators (30) mit den Bremsen(11, 11a),
wobei die Halteeinrichtung (34) den Kraftspeicher (31) und die Verbindungsstellen (37, 37a) in einer, einer Bereitschaftsstellung der Bremsen (11, 11a) entsprechenden ersten Betriebsposition hält,
wobei der Kraftspeicher (31) im Bedarfsfalle auf die Verbindungsstellen (37, 37a) einwirkt um die Bremsen (11, 11a) zu betätigen und in eine entsprechende Einrückstellung zu bringen,
wobei die Rückstelleinrichtung (36) den Kraftspeicher (31), die Halteinrichtung (34) und die Verbindungsstellen (37, 37a) nach Betätigung der Bremsen (11,11a) wieder zurück in die erste Betriebsposition bringt,
wobei der Kraftspeicher (31), die Halteeinrichtung (34) und die Verbindungsstellen (37, 37a) über einen Betätigungshebel (33) zusammenwirken und dieser Betätigungshebel (33) eine erste Verbindungsstelle (37) zur Verbindung zu einer ersten Bremse (11) und eine zweite Verbindungsstelle (37a) zur Verbindung des Aktuators (30) zu einer zweiten Bremse (11a) aufweist, und
wobei weiter die erste und die zweite Verbindungsstelle (37, 37a) derart am Betätigungshebel (33) angeordnet sind, dass die Verbindungen zu den Bremsen unter Einwirkung des Kraftspeichers (31) im Wesentlichen gegeneinander gezogen werden.

2. Aktuator nach Anspruch 1, wobei ein Angriffspunkt (P2) des Kraftspeichers (31) am Betätigungshebel (33) in Bezug zu einem Drehpunkt (P1) des Betätigungshebels (33) im Gehäuse des Aktuators (30) und zu einem Abstützpunkt (P3) des Kraftspeichers (31) im Gehäuse des Aktuators (30) so angeordnet sind, dass sich bei Betätigung des Aktuators (30) eine über einen Betätigungshub annäherungsweise konstante Zugkraft in den Verbindungen zu den Bremsen ergibt.

3. Aktuator nach einem der Ansprüche 1 oder 2, wobei der Aktuator (30) eine Dämpfeinrichtung (38) aufweist, welche einen Bewegungsablauf beim Betätigen des Aktuators (30) dämpft und / oder wobei der Aktuator (30) horizontal beweglich oder schwimmend an der Kabine angeordnet ist.

4. Aktuator nach einem der Ansprüche 1 bis 3, wobei der Aktuator (30) weiter eine Notentriegelung (50) aufweist, welche handbetätigbar ist und welche zumindest eine temporäre, manuelle Rückstellung des Aktuators in die erste Betriebsposition ermöglicht.

5. Aufzugsanlage mit einer Aufzugskabine (2), welche entlang von mindestens einer Führungsschiene (6) verfahrbar angeordnet ist, und einer an die Aufzugskabine (2) angebauter Bremseinrichtung (10) mit mindestens zwei Bremsen (11, 11a), welche bedarfsweise mit Führungsschienen (6) zusammenwirken, und mit einem Aktuator (30) gemäss einem der Ansprüche 1 bis 4 zum Betätigen der Bremsen (11, 11a).

6. Aufzugsanlage mit einer Aufzugskabine (2) gemäss Anspruch 5, wobei die beiden Bremsen (11, 11a) zumindest je ein Bremsgehäuse (12), einen Bremsbackenschlitten (13, 13a) und eine Bremsbacke (15, 15a) beinhalten, und
wobei die Bremsbacke (15, 15a) drehbar in dem Bremsbackenschlitten (13, 13a) angeordnet ist und der Bremsbackenschlitten (13, 13a) zwischen einer Bereitschaftsstellung und einer Einrückstellung linear verschiebbar im Bremsgehäuse (12) gelagert ist.

7. Aufzugsanlage mit einer Aufzugskabine (2) gemäss Anspruch 6, wobei die Bremsbacke (15, 15a) einen ersten Teilbereich (15b) und einen zweiten Teilbereich (15c) beinhaltet, wobei die Bremsbacke (15, 15a) im ersten Teilbereich (15b) um eine Lagerachse (17) drehbar angeordnet ist und im zweiten Teilbereich (15c) quer zu dieser Lagerachse (17) längsverschiebbar angeordnet ist.

8. Verfahren zum Betätigen einer Bremseinrichtung (10) mit mindestens zwei Bremsen (11, 11a), wobei ein Aktuator (30) mittels mindestens zwei Verbindungsstellen (37, 37a) mit den Bremsen (11, 11a) verbunden wird, wobei eine erste Verbindungsstelle (37) zur Verbindung des Aktuators (30) zu einer ersten Bremse (11) und eine zweite Verbindungsstelle (37a) zur Verbindung des Aktuators (30) zu einer zweiten Bremse (11a) verwendet wird,
wobei diese beiden Verbindungsstellen (37, 37a) sowie ein Kraftspeicher (31) und eine Halteeinrichtung (34) des Aktuators (30) über einen Betätigungshebel (33) zusammenwirken, wobei die erste und die zweite Verbindungsstelle (37, 37a) derart am Betätigungshebel (33) angeordnet werden, dass die Verbindungen zu den Bremsen unter Einwirkung des Kraftspeichers (31) im Wesentlichen gegeneinander gezogen werden,
wobei mittels der Halteeinrichtung (34) des Aktuators der Kraftspeicher (31) des Aktuators (30) und die Verbindungsstellen (37, 37a) in einer, einer Bereitschaftsstellung der Bremsen (11, 11a) entsprechenden ersten Betriebsposition gehalten werden,
wobei mittels des Kraftspeichers (31) des Aktuators (30) im Bedarfsfalle auf die Verbindungsstellen (37, 37a) eingewirkt wird und die Bremsen (11, 11a) durch diese Einwirkung betätigt und in eine entsprechende Einrückstellung gebracht werden, und wobei mit einer Rückstelleinrichtung (36) des Aktuators (30) der Kraftspeicher (31), die Halteinrichtung (34) und die Verbindungsstellen (37, 37a) nach Betätigung der Bremsen (11, 11a) wieder zurück in die erste Betriebsposition gebracht werden können.

## Claims

1. Actuator for attachment to a lift cage (2) of a lift installation (1), and suitable for actuating a brake device (10) with at least two brakes (11, 11a), comprising:
a force store (31),
a holding device (34),
a resetting device (36), and,
for the purpose of connecting the actuator with the brakes (11, 11a), at least two connecting points (37, 30),
wherein the holding device (34) holds the force store (31) and the connecting points (37, 37a) in a first operating position, corresponding with a readiness setting of the brakes (11, 11a),
wherein, in case of need, in order to actuate the brakes (11, 11a) and bring them into a corresponding engaged setting, the force store (31) acts upon the connecting points (37, 37a),
wherein, after actuation of the brakes (11, 11a), the resetting device (36) brings the force store (31), the holding device (34), and the connecting points (37, 37a) back into the first operating position again,
wherein the force store (31), the holding device (34), and the connecting points (37, 37a) together act through an actuating lever (33), and this actuating lever (33) has a first connecting point (37),
for connection with a first brake (11), and a second connecting point (37a), for connection of the actuator (30) with a second brake (11a), and
wherein, further, the first and the second connecting points (37, 37a) are, at the actuating lever (33), arranged in such manner that, under the influence of the force store (31), the connections with the brakes are essentially drawn towards each other.

2. Actuator according to Claim 1, wherein a point of engagement (P2) of the force store (31) on the actuating lever (33) is arranged in such manner that, with respect to a fulcrum (P1) of the actuating lever (33) in the housing of the actuator (30), and with respect to a support point (P3) of the force store (31) in the housing of the actuator (30), upon actuation of the actuator (30), a tensile force, which remains approximately constant throughout an actuation stroke, arises in the connections with the brakes.

3. Actuator according to one of claims 1 or 2, wherein the actuator (30) has a damping device (38) which, upon actuation of the actuator (30), damps a movement process, and/or wherein the actuator (30) is arranged on the cage in horizontally movable, or floating, manner.

4. Actuator according to one of claims 1 to 3, wherein the actuator (30) further has an emergency unlocking means (50), which is manually actuatable, and which enables at least a temporary, manual resetting of the actuator into the first operating position.

5. Lift installation with a lift cage (2), which is arranged to be movable along at least one guiderail (6), and a brake device (10) which is attached to the lift cage (2), with at least two brakes (11, 11a), which, in case of need, interact with guiderails (6), and, for the purpose of actuating the brakes (11, 11a), with an actuator (30) according to one of claims 1 to 4.

6. Lift installation with a lift cage (2) according to Claim 5, wherein the two brakes (11, 11a) each contain at least a brake housing (12), a brake-shoe carriage (13, 13a), and a brake shoe (15, 15a), and wherein the brake shoe (15, 15a) is arranged rotatably in the brake-shoe carriage (13, 13a), and the brake-shoe carriage (13, 13a) is borne in the brake housing (12) in linearly displaceable manner between a readiness setting and an engaged setting.

7. Lift installation with a lift cage (2) according to Claim 6, wherein the brake shoe (15, 15a) contains a first sub-region (15b) and a second sub-region (15c), wherein, in the first sub-region (15b), the brake shoe (15, 15a) is arranged rotatably about a bearing axle (17), and in the second sub-region (15c), is arranged to be longitudinally displaceable perpendicular to this bearing axle (17).

8. Method of actuating a brake device (10) with at least two brakes (11, 11a), wherein, by means of at least two connecting points (37, 37a), an actuator (30) is connected with the brakes (11, 11a), wherein, for connection of the actuator (30) with a first brake (11), a first connecting point (37), and, for connection of the actuator (30) with a second brake (11a), a second connecting point (37a), is used, wherein, by way of an actuating lever (33), these two connecting points (37, 37a), as well as a force store (31) and a holding device (34) of the actuator (30), act conjointly, wherein, at the actuating lever (33), the first and the second connecting points (37, 37a) are arranged in such manner that, under the effect of the force store (31), the connections with the brakes are essentially drawn towards each other, wherein, by means of the holding device of the actuator, the force store (31) of the actuator (30) and the connecting points (37, 37a) are held in a first operating position, which corresponds with a readiness setting of the brakes (11, 11a), wherein, in case of need, the force store (31) of the actuator (30) acts on the connecting points (37, 37a) and, by this action, the brakes (11, 11a) are actuated and brought into a corresponding engaged setting, and wherein, after actuation of the brakes (11, 11 c), by means of a resetting device (36) of the actuator (30), the force store (31), the holding device (34), and the connecting points (37, 37a) can be brought back into the first operating position again.

## Revendications

1. Actionneur à monter sur une cabine d'ascenseur (2) d'une installation d'ascenseur (1) et apte à actionner un dispositif de freinage (10) avec au moins deux freins (11, 11a), contenant :
un accumulateur d'énergie (31),
un dispositif de retenue (34),
un dispositif de rappel (36) et
au moins deux points de liaison (37, 37a) pour relier l'actionneur (30) aux freins (11, 11a),
étant précisé que le dispositif de retenue (34) retient l'accumulateur d'énergie (31) et les points de liaison (37, 37a) dans une première position de fonctionnement qui correspond à une position d'attente des freins (11, 11a),
que l'accumulateur d'énergie (31) agit en cas de besoin sur les points de liaison (37, 37a) afin d'actionner les freins (11, 11a) et de les amener dans une position d'enclenchement correspondante,
que le dispositif de rappel (36) ramène dans la première position de fonctionnement l'accumulateur d'énergie (31), le dispositif de retenue (34) et les points de liaison (37, 37a) après l'actionnement des freins (11, 11a),
que l'accumulateur d'énergie (31), le dispositif de retenue (34) et les points de liaison (37, 37a) coopèrent par l'intermédiaire d'un levier d'actionnement (33) et que ce levier d'actionnement (33) comporte un premier point de liaison (37) pour la liaison à un premier frein (11), et un second point de liaison (37a) pour relier l'actionneur (30) à un second frein (11a), et
que les premier et second points de liaison (37, 37a) sont par ailleurs disposés sur le levier d'actionnement (33) de telle sorte que les liaisons avec les freins soient globalement tirées l'une vers l'autre sous l'action de l'accumulateur d'énergie (31).

2. Actionneur selon la revendication 1, étant précisé qu'un point d'action (P2) de l'accumulateur d'énergie (31) sur le levier d'actionnement (33) est disposé par rapport à un pivot (P1) dudit levier d'actionnement (33) dans le boîtier de l'actionneur (30) et à un point d'appui (P3) de l'accumulateur d'énergie (31) dans le boîtier de l'actionneur (30) de telle sorte que lors de l'actionnement de l'actionneur (30), il y ait dans les liaisons avec les freins une force de traction à peu près constante sur une course d'actionnement.

3. Actionneur selon l'une des revendications 1 ou 2, étant précisé que l'actionneur (30) comporte un dispositif d'amortissement (38) qui amortit un déroulement de déplacement lors de l'actionnement de l'actionneur (30), et/ou que l'actionneur (30) est disposé mobile ou flottant horizontalement sur la cabine.

4. Actionneur selon l'une des revendications 1 à 3, étant précisé que l'actionneur (30) comporte également un déverrouillage de secours (50) qui est apte à être actionné manuellement et qui permet au moins un retour manuel temporaire de l'actionneur dans la première position de fonctionnement.

5. Installation d'ascenseur avec une cabine d'ascenseur (2) qui est disposée pour pouvoir circuler le long d'au moins un guide (6), et un dispositif de freinage (10) monté sur la cabine d'ascenseur (2) et comprenant au moins deux freins (11, 11a) qui coopèrent au besoin avec les guides (6), et avec un actionneur (30) selon l'une des revendications 1 â 4 pour actionner les freins (11, 11a).

6. Installation d'ascenseur avec une cabine d'ascenseur (2) selon la revendication 5, étant précisé que les deux freins (11, 11a) contiennent chacun au moins un carter de frein (12), un coulisseau de mâchoire de frein (13, 13a) et une mâchoire de frein (15, 15a), et
que la mâchoire de frein (15, 15a) est disposée en rotation dans le coulisseau de mâchoire de frein (13, 13a) et que ledit coulisseau (13, 13a) est monté, dans le carter de frein (12), mobile linéairement entre une position d'attente et une position d'enclenchement.

7. Installation d'ascenseur avec une cabine d'ascenseur (2) selon la revendication 6, étant précisé que la mâchoire de frein (15, 15a) contient une première zone partielle (15b) et une seconde zone partielle (15c), et que la mâchoire de frein (15, 15a) est disposée en rotation sur un axe de montage (17), dans la première zone partielle (15b), et mobile longitudinalement transversalement par rapport à cet axe de montage (17), dans la seconde zone partielle (15c).

8. Procédé pour actionner un dispositif de freinage (10) avec au moins deux freins (11, 11a), étant précisé qu'un actionneur (30) est relié aux freins (11, 11a) à l'aide d'au moins deux points de liaison (37, 37a), qu'un premier point liaison (37) est utilisé pour relier l'actionneur (30) à un premier frein (11), et un second point de liaison (37a) pour relier l'actionneur (30) à un second frein (11a),
que ces deux points de liaison (37, 37a) ainsi qu'un accumulateur d'énergie (31) et un dispositif de retenue (34) de l'actionneur (30) coopèrent par l'intermédiaire d'un levier d'actionnement (33),
que les premier et second points de liaison (37, 37a) sont disposés sur le levier d'actionnement (33) de telle sorte que les liaisons avec les freins soient globalement tirées l'une vers l'autre sous l'action de l'accumulateur d'énergie (31),
qu'à l'aide du dispositif de retenue (34) de l'actionneur, l'accumulateur d'énergie (31) dudit actionneur (30) et les points de liaison (37, 37a) sont retenus dans une première position de fonctionnement qui correspond à une position d'attente des freins (11, 11a),
qu'à l'aide de l'accumulateur d'énergie (31) de l'actionneur (30), une action est exercée en cas de besoin sur les points de liaison (37, 37a) et les freins (11, 11a), grâce à cette action, sont actionnés et sont amenés dans une position d'enclenchement correspondante, et
qu'avec un dispositif de rappel (36) de l'actionneur (30), l'accumulateur d'énergie (31), le dispositif de retenue (34) et les points de liaison (37, 37a) peuvent être ramenés dans la première position de fonctionnement, après l'actionnement des freins (11, 11a).
